# EUROPEAN PATENT APPLICATION

(11) **EP 3 590 740 A1**
(43) Date of publication of application: **08.01.2020**
(21) Application number: 19183536.2
(22) Date of filing: 01.07.2019
(51) Int. Cl.: B60G 11/26, B60G 17/056, B60G 21/073

(54) **HYDRAULIC ARRANGEMENT FOR HYDRAULIC SUSPENSIONS OF A WORK VEHICLE**

(30) Priority: 04.07.2018 IT 201800006928
(71) Applicant: CNH Industrial Italia S.p.A., 10135 Torino (IT)
(72) Inventor: GENTILE, Francesco, 41123 Modena (IT); DIGESU´, Pasquale, 41124 Modena (IT); PAOLINI, Francesco, 41122 Modena (IT)
(74) Representative: CNH Industrial IP Department

(57) **Abstract**

Hydraulic arrangement (1) for hydraulic cylinders (2, 3) of suspensions a work machine comprising a first source (5) of fluid fluidly connected to respective piston chambers (2p, 3p) of the cylinders (2, 3), a second source (7) of fluid fluidly connected to respective rod chambers (2r, 3r) of the cylinders (2, 3), a piston and a rod connection modules (8,9) fluidly interposed between the first source of fluid and respectively piston and rod chambers (2p, 3p, 2r, 3r) and a levelling valve (10) fluidly connected to the piston connection module (8), at least one between the piston and rod connection modules (8,9) being configured to regulate the fluid communication between the first source (5) and the respective chambers from a first level in which there is no fluidic communication and a second level in which there is fully fluidic communication, and to generate a passive fluidic resistance to a fluid coming from one of the respective chambers into the at least one between piston and rod connection modules (8, 9). Fig. 2

## Description

### TECHNICAL FIELD

The present invention concerns a hydraulic arrangement for a work vehicle, in particular hydraulic arrangement for controlling hydraulic suspensions of a work vehicle.

### BACKGROUND OF THE INVENTION

Vehicles usually comprise suspensions which connect the axle to the chassis of this latter and configured to dampen a movement of the axle with respect to chassis so as to avoid the transmission of road irregularities to chassis and, thus, to driver's cab. Indeed, the aforementioned movements, in particular rolling of the vehicle, are particular annoying for the driver of the vehicle.

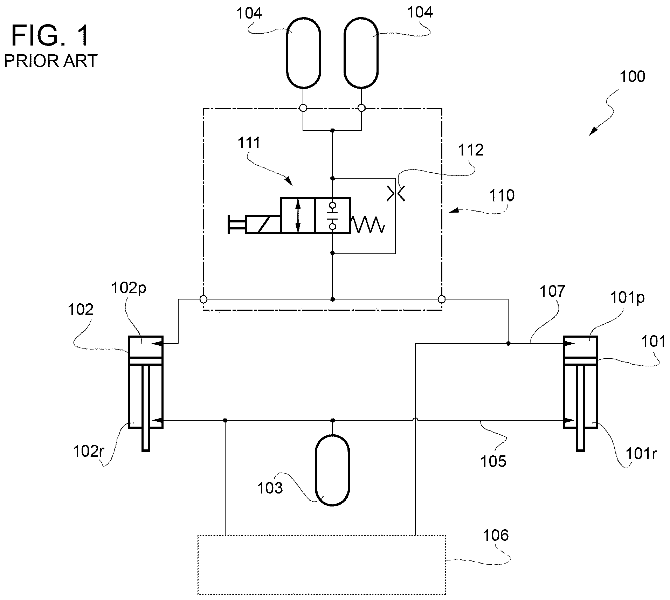

To solve the aforementioned problem it is known to provide, between right and left suspension of a suspension system, a hydraulic arrangement as disclosed in Figure 1.

Such hydraulic arrangement 100, as known in the prior art, comprises a first cylinder 101, e.g. a right cylinder of a right suspension for an axle of a vehicle and a second cylinder 102, e.g. a left cylinder of a left suspension for said axle of the vehicle. Each cylinder 101, 102 comprises a piston chamber 101p, 102p and a rod chamber 101r, 102r each connected together to a source of fluid in pressure and to drain as disclosed in greater detail in the following.

In particular, rod chambers 101r, 102r are fluidly connected together via a first connection line 105 to a first source 103 of fluid in pressure; first connection line 105 is moreover fluidly connected to a levelling valve 106 for lowering and raising the suspension . Piston chambers 101p, 102p are fluidly connected together via a second connection line 107 to a second source 104 of fluid in pressure; second connection line 107 is moreover fluidly connected to the levelling valve 106.

Between second source 104 of fluid in pressure and piston chambers 101p, 102p, a selection stage 110 is fluidly interposed. Selection stage 110 comprises a selection valve 111 configured to selectively allow the passage of the fluid from second source 104 of fluid to piston chambers 101p, 102p; in the disclosed scheme valve 111 is an electrically actuated two way two positions valve.

Selection stage 110 further comprises an orifice 112 fluidly interposed in parallel to , i.e. bypassing, selection valve 111.

The above described hydraulic arrangement 100 as known in the prior art can provide two working modes. According to a first working mode (as shown in figure 1), selection valve 111 is arranged so that forces the passage of fluid from second source 104 to flow to piston chambers 101p, 102p via orifice 112. According to a second working mode (not shown), selection valve 111 is arranged so that fluid from second source 104 to piston flows to chambers 101p, 102p directly through valve 111.

In first working mode suspensions are not active, i.e. valve 111 is positioned so as to force passage of fluid from sources 104 to chambers 101p, 102p via orifice 112, while in second working mode suspensions are active, i.e. valve 111 is positioned so as to allow free passage of fluid from sources 104 to chambers 101p, 102p. Accordingly, in first working mode suspensions are soft, allowing a vertical movement of the axle connected to the suspensions, while in second working mode they are locked, locking consequently a vertical movement of such axle.

According to the described arrangement, roll cannot be controlled in both situations because piston chambers 101p, 102p are fluidly directly connected to each other. Indeed, fluid coming from a piston chamber 101p, 102p flows directly to the other piston chamber 101p, 102p through orifice 112 which is only configured to balance pressures of fluid upstream and downstream with respect to valve 111.

In view of the preceding, the need is felt to provide a hydraulic arrangement for controlling roll of a work machine which allows roll control during all operative conditions of the circuit.

An aim of the present invention is to satisfy the above mentioned needs in an optimized and cost-effective way.

### SUMMARY OF THE INVENTION

The aforementioned aim is reached by a hydraulic arrangement for hydraulic suspensions for a work vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a scheme of a hydraulic arrangement for hydraulic suspensions for work vehicle as known in the art;
- Figure 2 is a scheme of a hydraulic arrangement for hydraulic suspensions for work vehicle according to the present invention;
- Figure 3 is a scheme of an exemplary embodiment of hydraulic arrangement for hydraulic suspensions for work vehicle according to the present invention;
- Figures 4a-4d are respective schemes of possible different embodiments of a first stage of a hydraulic arrangement according to the invention;
- Figures 5a-5d are respective schemes of possible different embodiments of a first stage of a hydraulic arrangement according to the invention;
- Figures 6a-6c are respective schemes of possible different embodiments of a first stage of a hydraulic arrangement according to the invention;
- Figures 7a-7b are respective schemes of possible different embodiments of a first stage of a hydraulic arrangement according to the invention;
- Figures 8a-8e are respective schemes of possible different embodiments of a second stage of a hydraulic arrangement according to the invention; and
- Figures 9a- 9m are respective schematic representations of valves which may be used in first and second stages of figures 4 to 8.

### DETAILED DESCRIPTION OF THE INVENTION

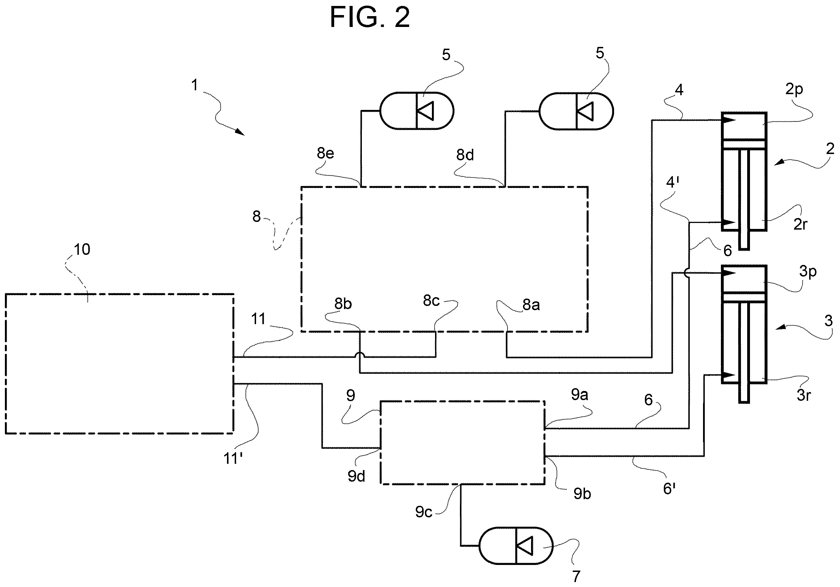

Figure 2 discloses a hydraulic arrangement 1 according to the present invention comprising a first cylinder 2, e.g. a right cylinder of a right suspension for an axle of a work vehicle and a second cylinder 3, e.g. a left cylinder of a left suspension of said axle the work vehicle. Each cylinder 2, 3 comprises a piston chamber 2p, 3p and a rod chamber 2r, 3r each connected as disclosed in greater detail in the following.

Piston chambers 2p, 3p are fluidly connected via respective piston connection lines 4, 4' to respective first sources 5 of fluid in pressure, namely a weight loaded or a spring loaded accumulator, a gas charged piston or a bladder, while rod chambers 2r, 3r are fluidly connected via respective rod connection lines 6, 6' to a source 7 of fluid in pressure.

Hydraulic arrangement 1 further comprises a piston connection module 8 and a rod connection module 9 respectively fluidly interposed between sources 5 and piston chambers 2p, 3p on piston connection lines 4, 4' and between source 7 and rod chambers 2r, 3r on rod connection lines 6, 6' . Such piston and rod connection module are further fluidly connected to a levelling valve 10 via respective connection conduits 11, 11'.

In particular, piston connection module 8 comprises first and second openings 8a, 8b fluidly connected via piston connection lines 4, 4' to piston chambers 2p, 3p, a third opening 8c fluidly connected via connection conduit 11 to levelling valve 10 and fourth and fifth openings 8d, 8e fluidly connected to sources 5. Rod connection module 9 comprises first and second openings 9a, 9b fluidly connected via piston connection lines 6, 6' to rod chambers 2r, 3r, a third opening 9d fluidly connected via connection conduit 11' to levelling valve 10 and fourth openings 9c fluidly connected to source 7, of any of the aforementioned typology.

In particular, piston connection module 8 is configured to regulate the fluid communication between the first source 5 and piston chambers 2p, 3p from a first level in which there is no fluidic communication and a second level in which there is fully fluidic communication. Such regulation is achieved by valves as described in the following in greater detail.

According to the present invention, at least one between piston connection module 8 and rod connection module 9, and preferably piston connection module 8 is configured to allow the control of roll of the vehicle in all working modes of the suspensions, i.e. during all regulations of the fluid between first source 5 and piston chambers 2p, 3p.

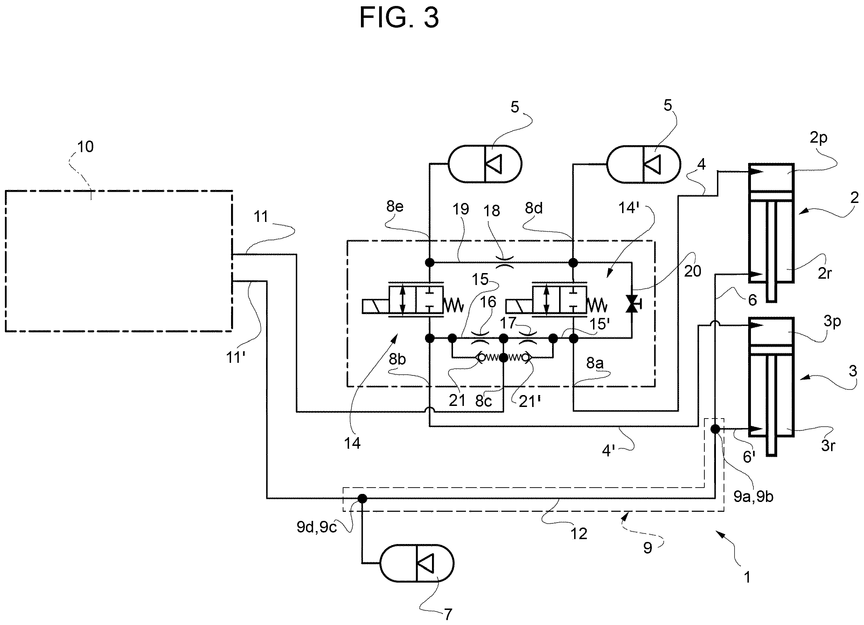

According to a preferred embodiment of the present invention, as shown in figure 3, rod connection module 9 comprises a conduit 12 directly fluidly connecting openings 9a, 9b and 9c, 9d together while piston connection module 8 comprises the elements as described hereunder.

Piston connection module 8 comprises a couple of valves 14, 14', for sake of clarity a left and a right valve, preferably proportional electro-actuated valves, respectively fluidly interposed between openings 8b and 8e and 8a and 8d of module 8 on piston connection lines 4, 4'. Connection conduit 11 is fluidly connected through opening 8c to a pair of split conduits 15, 15' which are connected respectively to piston connection lines 4, 4' downstream with respect to left and right valves 14, 14'. Left split conduit 15 comprises a first orifice 16 and right split conduit 15' comprises a second orifice 17. Said orifices are used to restricts the flow path in which they are placed. The orifices 16, 17 and 18 preferably are passive orifices or a passive orifice proportional valve or single proportional valves or variable orifices or any combination thereof.

According to the present invention piston connection module 8 further comprises a third orifice 18 fluidly interposed on a duct 19 fluidly connecting valves 14, 14' upstream these latter but downstream openings 8d, 8e. Preferably third orifice 18 has a size that is wider than the sizes of the first and second orifices 16, 17; more preferably the size of the third orifice is comprised between 1 and 5 mm and the sizes of the first and second orifices are both comprised between 0,5 and 2,5 mm. Advantageously first and second orifices 16, 17 may have a different size each other.

Piston connection module may further comprise a drain valve 20, fluidly bypassing one of valves 14, 14', preferably right valve 14', configured to drain oil from circuit 1 for inspection of valves 14, 14'.

Piston connection module 8 may further comprise a pair of non-return valves 21, 21' respectively bypassing the orifices 16 and 17; non-return valves 21, 21' preferably allow the passage of fluid from pistons 2 and 3 to opening 8c but not the opposite.

The operation of the above described preferred embodiment of the invention is the following.

In a first working mode, corresponding to the one shown in figure 3, valves 14, 14' are positioned so that fluid cannot flow directly from sources 5 to piston chambers 2p, 3p. In such configuration piston chambers may fluidly communicate thanks to orifices 16, 17 which allows a, strict, passage of fluid if one of the two cylinders varies its working position. If, supposing, right cylinder 2 would compress piston chamber 2p, e.g. because of ground conformation during passage of the work vehicle, fluid will be pushed towards piston chamber 3p of left cylinder 3 via orifice 16. Since the orifice 16 reduces the oil flow, it consequently dampens the axle tilting in this first working mode .Fluid passes only through the valve 21' to levelling valve 10 and cannot pass through valve 21. In this way, a sudden overpressure of the oil in piston chamber 2p, 3p may flow to levelling valve 10.

In a second working mode (not shown) valves 14, 14' are positioned so that fluid may flow directly from sources 5 to piston chambers 2p, 3p. In such configuration piston chambers may fluidly communicate thanks to orifice 18 which allows a, passage of fluid if one of the two cylinders varies its working position. If, supposing, right cylinder 2 would compress piston chamber 2p, e.g. because of ground conformation during passage of the work vehicle, fluid will be pushed towards piston chamber 3p of left cylinder 3 via orifice 18. Since the orifices 18 reduces the oil flow, it consequently dampens the axle tilting in this second working mode. Similarly to the first working mode, fluid may through one of valves 21, 21' to levelling valve 10. Moreover fluid would not pass through orifices 16 and 17 because their sizes are smaller compared to the size of orifice 18 which then offers less resistance to fluid passage.

The passage of fluid from chambers 2p to 3p via orifices 16, 17 and 18 in both working conditions allows an improved compensation of roll, i.e. of a sudden movement of a cylinder 2,3 with respect to the other.

Many embodiments may be realized according to the above described teaching of the present invention. Such embodiments will be described synthetically in the following. In particular, piston connection module 8 may be realized as follows.

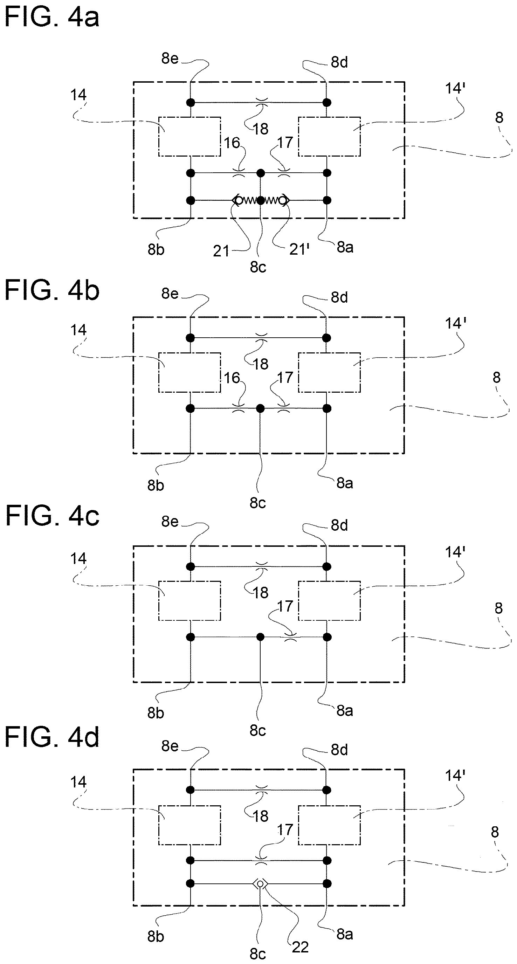

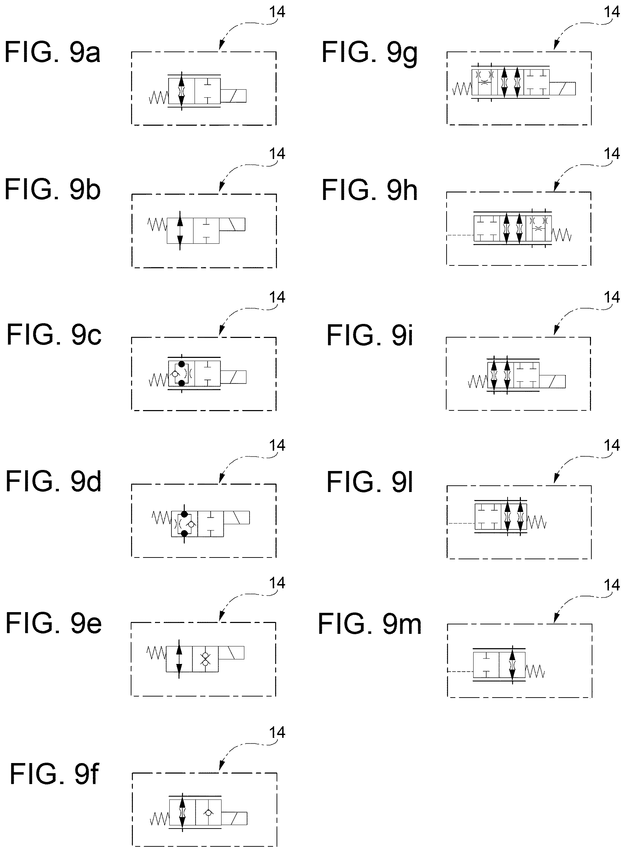

Figure 4a discloses the same structure of the preferred described embodiment, but, in substitution of valves 14, 14' any of the two ways-two positions valves 9a to 9f may be used, i.e. a ON-OFF valve as shown in figures 9b and 9e, a proportional valve as shown in figures 9a and 9f or a bi-flow valve as shown in figures 9c (proportional) or 9b (ON/OFF) .

Figure 4b discloses the same structure of the preferred described embodiment, however non-return valves 21, 21' are absent and, in substitution of valves 14, 14', any of the above mentioned two ways-two positions valves 9a to 9f may be used.

Figure 4c discloses the same structure of the preferred described embodiment, however non-return valves 21, 21' are absent and, in substitution of valves 14, 14', any of the above mentioned two ways-two positions valves 9a to 9f may be used. Moreover, only second orifice 17 is present while no orifice are present on left split conduit 15.

Figure 4d discloses the same structure of the preferred described embodiment, however non-return valves are substituted by a shuttle valve 22 interposed between split conduits 15, 15' and, in substitution of valves 14, 14', any of the above mentioned two ways-two positions valves 9a to 9f may be used. Moreover, only second orifice 17 is present, fluidly interposed in parallel upstream to shuttle valve 22 downstream with respect to valves 14, 14'.

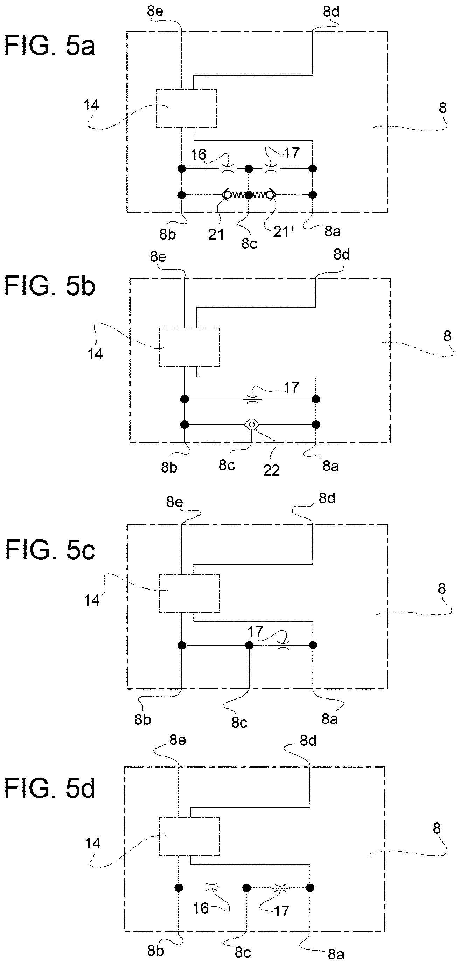

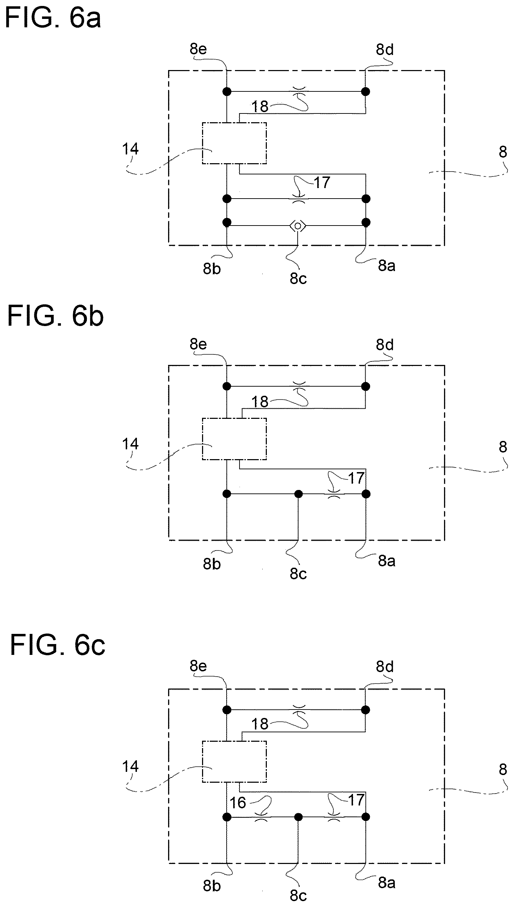

Figures 5a to 5d or figures 6a to 6d disclose embodiments of piston connection module 8 which comprises a single valve, namely a four-ways valve instead of two-ways valve.

Figure 5a discloses the same structure of the preferred described embodiment, however only a single four ways valve 14 is present fluidly interposed between first and second orifices 16, 17. Such four ways valve 14 may be, for instance a proportional four ways - three positions valve as disclosed in figure 9g, a ON-OFF four ways - three positions valve as disclosed in figure 9h, a ON-OFF four way - two position valve as disclosed in figure 9i or an externally controlled proportional four ways - two positions valve as disclosed in figure 9l.

Figure 5b discloses an embodiment in which non-return valves 21 of the preferred embodiment are substituted by a shuttle valve 22 interposed between split conduits 15, 15'; moreover, only second orifice 17 is present, fluidly interposed in parallel upstream to shuttle valve 22 and downstream with respect to the single valve 14. Single valve 14 may be of any of the above cited four ways - three positions valves a 9g or 9h and is fluidly interposed between second orifice 17 and fourth and fifth openings 8d, 8e.

Figure 5c discloses an embodiment similar to the embodiment of figure 5b in which no check valves 22 are present and only second orifice 17 is present while no orifice are present on left split conduit 15.

Figure 5d discloses an embodiment similar to the embodiment of figure 5c in which first orifice 16 is present on left split conduit and second orifice 17 is present on right split conduit 15.

Figure 6a discloses an embodiment similar to the embodiment of figure 5b but further comprising a second orifice 18 fluidly interposed in parallel to valve 14 upstream to this latter. Single valve 14 may be a four ways - two positions valve, e.g. a ON-OFF two position-four ways valve as disclosed in figure 9i or an externally controlled ON-OFF four ways - two positions valve as disclosed in figure 9l.

Figure 6b discloses an embodiment similar to the embodiment of figure 6a in which no check valves 22 are present and only second orifice 17 is present while no orifice are present on left split conduit 15.

Figure 6c discloses an embodiment similar to the embodiment of figure 6b in which first orifice 16 is present on left split conduit and second orifice 17 is present on right split conduit 15.

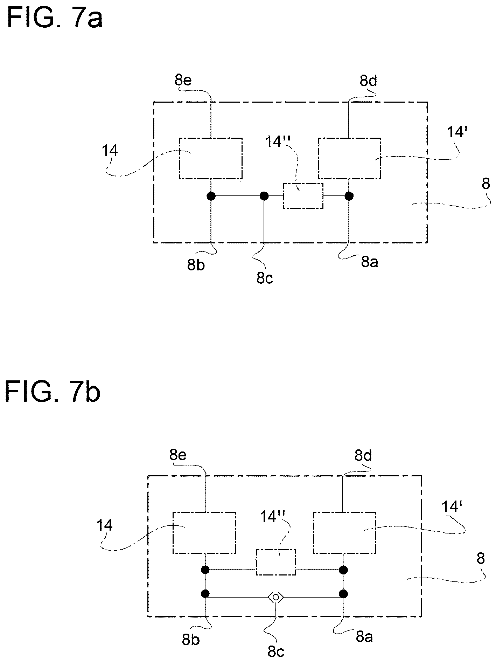

Figures 7a and 7b disclose embodiments of piston connection module 8 which comprises a three valves, for instance as described in the following.

Figure 7a discloses an embodiment in which fourth and fifth openings 8d, 8e are fluidly connected to first and second openings 8a, 8b and comprises valves 14, 14' each fluidly interposed respectively between fifth and first openings 8a, 8e and 8b, 8d. Third opening 8c is fluidly connected via split conduits 15, 15' to valves 14, 14' downstream these latter. Module 8 further comprises a third valve 14" fluidly interposed on one of split conduits 15, 15', preferably the right one. Valves 14, 14' may be a two ways - two positions valve, and in particular any of valves 9a to 9f may be used, i.e. a ON-OFF valve as shown in figures 9b and 9e, a proportional valve as shown in figures 9a and 9f or a bi-flow valve as shown in figures 9c (proportional) or 9b (ON/OFF), while valve 14" may be any of valves 9a or 9m (external ON/OFF pilot valve).

Figure 7B discloses an embodiment similar to the embodiment of figure 7a in which a shuttle valve 22 is present fluidly interposed between third opening 8c and split conduits 15, 15' and a third valve 14" is fluidly interposed in parallel upstream with respect to shuttle valve 22 but downstream with respect to valves 14, 14'. Valves 14, 14', 14" may be any of the ones cited for the circuit of figure 7a.

The operation of the above described 7A -7B embodiments is similar to the other described embodiments, however valve 14" is functional equivalent, being a proportional valve, of the orifices 16, 17 and 18 of the described preferred embodiments.

For each of the above described embodiments of piston connection module 8, a different rod connection module 9 may be realized as follows.

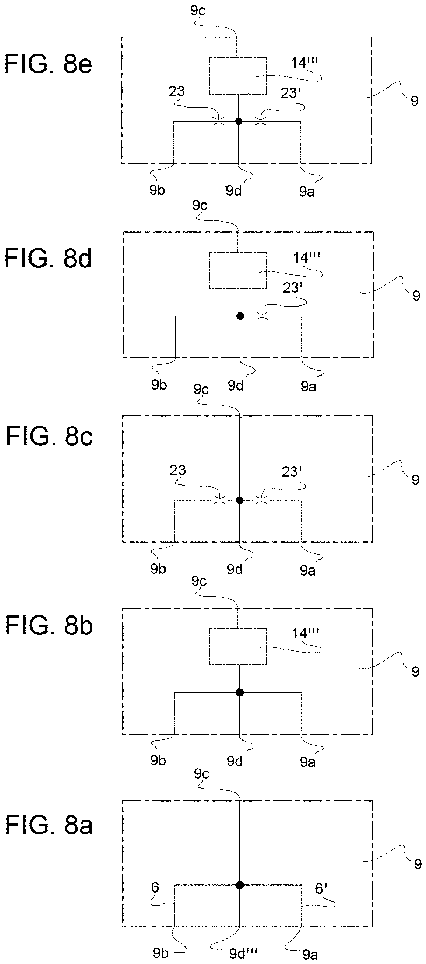

Figure 8a discloses the rod connection module 9 according to the preferred embodiment of the present invention.

Figure 8b discloses an embodiment similar to the embodiment of figure 8a in which a valve 14''' is fluidly interposed between source 7 and lines 11', 6, 6' . Valve 14''' may be any of the two way- two positions valves 9a to 9f as disclosed above.

Figure 8c discloses an embodiment similar to the embodiment of figure 8a in which two further fourth orifices 23, 23' are respectively fluidly interposed on conduits 6, 6' .

Figures 8d and 8e disclose respective embodiments similar to the embodiment of figure b in which two further fourth orifices 23, 23' are respectively fluidly interposed on conduits 6, 6' (figure 8d) or a single further fourth orifice 23 is fluidly interposed on one between conduits 6, 6', preferably conduit 6'.

The operation of the above described embodiments of hydraulic circuits 1 comprising different modules 8 and 9 are not described herein for sake of brevity, being such operations implicitly inferable from the described circuits.

In view of the foregoing, the advantages of the hydraulic arrangement for roll control of a work vehicle according to the invention are apparent.

Thanks to the additional orifice 18 fluid may flow between piston chambers 2p, 3p during all regulations of piston connection module 8thereby controlling roll motion of the work vehicle in all possible working modes.

Since additional the size of orifice 18 is wider than the sizes of the first and second orifices 16, 17 the suspension will be controlled in a softer way than in the opposite working mode in which suspension will be stiffer because of the different dimensions of the above mentioned sizes of the orifices.

Such stiffness may be regulated by regulating the dimension of orifices 16, 17 and 18 and/or pressure or flow of fluid coming from sources 5 and 7.

Thanks to such roll control, the user's comfort is increased in both working modes. Stiffer control of roll motion of the vehicle may be useful, for instance, when work vehicle is in sloping areas. Consequently, handling and stability of the vehicle are increased.

Moreover, since orifices 16 and 17 are different between each other, they compensate different pressure drop along the lines going from piston module to the piston chambers.

Since orifices 16, 17 are passive elements, the solution is cost-effective and requires few modifications of layout of known hydraulic arrangements.

When using proportional valves instead of the described ON/OFF valves, a variable roll damping may be regulated.

It is clear that modifications can be made to the described hydraulic arrangement for roll control of a work vehicle which do not extend beyond the scope of protection defined by the claims.

For example, cited embodiments may be combined together to define different circuit topology which are equivalent to the claimed one to one skilled in the art.

The disclosed embodiments related to the orifice for piston connection module 8 may be, in addition or in sostitution, applied to rod connection module 9

Other valves may further be used instead of the disclosed ones and, further, drain valve 20 may be absent or positioned in any other useful location in the arrangement 1.

## Claims

1. Hydraulic arrangement (1) for controlling a first and second hydraulic cylinders (2, 3) of respective first and second suspensions of a work vehicle, said hydraulic arrangement (1) comprising at least a first source (5) of fluid fluidly connected to respective piston chambers (2p, 3p) of said first and second hydraulic cylinders (2, 3), at least a second source (7) of fluid fluidly connected to respective rod chambers (2r, 3r) of said first and second hydraulic cylinders (2, 3), said hydraulic arrangement (1) further comprising a piston connection module (8) fluidly interposed between said first source of fluid and said piston chambers (2p, 3p), a rod connection module (9) fluidly interposed between said first source of fluid and said rod chambers (2r, 3r) and a levelling valve (10) fluidly connected to said piston and rod connection modules (8, 9), at least one between said piston and rod connection modules (8, 9) being configured to regulate the fluid communication between said first source (5) and the respective chambers (2p, 3p, 2r, 3r) from a first level in which there is no fluidic communication and a second level in which there is fluidic communication, **characterized in that** at least one module between said piston connection module (8) and said rod connection module (9) is configured to generate a passive fluidic resistance in said first and second levels to a fluid coming from one of the respective chambers (2p, 3p, 2r, 3r) to said at least one module (8, 9) .

2. Work vehicle according to claim 1, wherein only said piston connection module (8) is configured to generate said passive fluidic resistance.

3. Work vehicle according to claim 1, wherein piston connection module (8) is configured to generate a passive fluidic resistance to a fluid coming from one of said piston chambers (2p, 3p) to said piston connection module (8) in all possible levels of regulation of said piston connection module (8) comprised between said first and second levels.

4. Work vehicle according to claim 3, wherein said passive fluidic resistance of said piston connection module (8) is achieved by means of at least an orifice (16, 17, 18, 14").

5. Work vehicle according to any of the preceding claims, wherein said piston connection module (8) comprises at least a valve (14, 14',) fluidly interposed between said first source (5) of fluid and said piston chambers (2p, 3p) and at least a first orifice (16; 17 14") fluidly interposed in parallel between said at least a valve (14, 14',) downstream with respect to this latter and at least a second orifice (18) fluidly interposed in parallel between said at least a valve (14, 14',) upstream with respect to these latter.

6. Work vehicle according to claim 5, wherein said piston connection module (8) further comprises at least a non-return valve (21,21') fluidly interposed in parallel between said at least downstream with respect to said at least first orifice (16; 17).

7. Work vehicle according to claim 5, wherein said piston connection module (8) further comprises a shuttle valve (22) fluidly interposed in parallel between said at least downstream with respect to said at least first orifice (16; 17) .

8. Work vehicle according to any of claims 5 to 7, wherein said second orifice (18) is wider than said at least first orifice (16; 17).

9. Work vehicle according to any of claims 5 to 7, wherein the diameter of said at least first orifice (16; 17) is comprised between 0,5 and 2,5 mm and the diameter of said second orifice (18) is comprised between 1 and 5 mm.

10. Work vehicle according to any of claims 5 to 9, wherein said piston module (8) further comprises a third orifice (16; 17) in series with said first orifice (16; 17).

11. Work vehicle according to any of claims 10, wherein said third orifice (16; 17) has a width which is different with respect to the width of said first orifice (16; 17).

12. Work vehicle according to any of claims 5 to 11, wherein said at least a valve are two valves (14, 14'), said two valves (14, 14') being two ways - two positions valves.

13. Work vehicle according to any of claims 4 to 10, wherein said at least a valve is a single valve (14), said valve being a four ways - two positions valve or a three position- four ways valve.

14. Work vehicle according to any of claims 4 to 8, wherein said at least a valve are three valves (14, 14', 14"), said three valves being two ways - two positions valves.

15. Work vehicle according to any of claims 2 to 14, wherein said rod connection module (9) only comprises a conduit (12) directly fluidly connecting said rod chambers (2r, 3r), said second source (7) and said levelling valve (10) .

16. Work vehicle according to any of claims 2 to 15, wherein said rod connection module comprises a valve (14''') fluidly interposed among said rod chambers (2r, 3r), said second source (7) and said levelling valve (10).

17. Work vehicle according to any of claims 2 to 16, wherein said rod connection module (9) comprises at least one orifice (23; 23') fluidly interposed between said rod chambers (2r, 3r) and said second source (7).
